# EUROPÄISCHE PATENTSCHRIFT

(11) **EP 1 114 091 B1**
(45) Veröffentlichungstag und Bekanntmachung des Hinweises auf die Patenterteilung: **21.05.2003**
(21) Anmeldenummer: 99939257.4
(22) Anmeldetag: 19.08.1999
(51) Int. Cl.: C08J 9/30

(54) **VERFAHREN ZUR HERSTELLUNG EINES SCHAUMSTOFFES**
METHOD FOR PRODUCING A FOAM
PROCEDE DE PRODUCTION D'UNE MATIERE PLASTIQUE ALVEOLAIRE

(30) Priorität: 21.08.1998 AT 142698
(43) Veröffentlichungstag der Anmeldung: 11.07.2001
(73) Patentinhaber: Algotec Entwicklungs-und Verwertungsges.m.b.H., 9170 Ferlach (AT)
(72) Erfinder: KUNSTMANN, Arturo F., Villa El Golf, Punta Arenas, XII (CL); STRASSER, Thomas, A-6330 Kufstein (AT); WINTER, Manfred, A-8043 Graz (AT)
(74) Vertreter: Pawloy, Peter Michael, Dipl.-Ing.
(86) Internationale Anmeldenummer: AT9900205
(87) Internationale Veröffentlichungsnummer: WO00011069

(56) Entgegenhaltungen:
- GB-A- 560 317
- US-A- 3 334 052

## Beschreibung

Die Erfindung betrifft ein Verfahren zur Herstellung eines Schaumstoffes, ausgehend von nachwachsenden Rohstoffen, insbesondere natürlich nachwachsenden Rohstoffen, wie z.B. Algen.

Schaumstoffe werden seit den 30er Jahren in großen Mengen produziert. Ihr Einsatzgebiet ist vielfältig und erstreckt sich von Anwendungen in der Bauindustrie, in der Verpackungsindustrie bis hin zu Anwendungen in der Raumfahrt.

Die ersten Schaumstoffe wurden auf Basis von Harnstoff-Formaldehydharzen hergestellt. Mitte der 40er Jahre folgten dann die Schaumstoffe auf der Basis von Phenolformaldehydharzen. Weitere Entwicklungsschritte stellten die Verwendung von Polystyrol, Weich-PVC, Polyurethan und Silicongummi dar. Die bisher letzten Entwicklungen betreffen die Verwendung von Polyethylen und Epoxidharz.

Schaumstoffe sind Zweiphasensysteme. Ihre Herstellung erfolgte bisher durch Aufschäumung einer Gerüstsubstanz. Zur Aufschäumung werden dabei Treibmittel eingesetzt, wobei feste, flüssige und gasförmige Substanzen bekannt sind. Am häufigsten werden gasförmige Treibmittel verwendet. Vor allem teilhalogenierte Kohlenwasserstoffe (als Ersatzstoff für vollhalogenierte Kohlenwasserstoffe) haben heute einen weiten Anwendungsbereich. Solche teilhalogenierte Kohlenwasserstoffe besitzen jedoch weiterhin, wenn auch in geringerem Maße als vollhalogenierte Fluorchlorkohlenwasserstoffe, ein Ozonzerstörungspotential. Daher ist es aus ökologischen Gründen notwendig, auch diese Substanzen zu ersetzen.

Es gibt nun in der Schaumstoffherstellung mehrere Möglichkeiten, die Emission teilhalogenierter Kohlenwasserstoffe zu verringern bzw. zu verhindern:
- Ersatz der teilhalogenierten Kohlenwasserstoffe durch alternative Treibmittel wie einfache Kohlenwasserstoffe (Propan, Butan, Pentan), oder Inertgase (N₂, CO₂) bei der Herstellung herkömmlicher Schaumstoffe.
- Verbesserung der Produktionstechnologie. Dabei setzt man auf eine verminderte Emission während des Produktionsablaufes. Der Einsatz von z.B. Aktivkohlefiltern zur Abluftreinigung teilhalogenierter Kohlenwasserstoff-hältiger Abgase stellt eine solche Maßnahme dar.
   Substitution der mit teilhalogenierten Kohlenwasserstoffen aufgeschäumten Schaumstoffe durch Alternativprodukte, bei deren Herstellung vollständig auf den Einsatz halogenierter Kohlenwasserstoffe verzichtet wird.

In letzter Zeit wurden bereits auf natürliche Rohstoffe basierende Isolations- und Verpackungsmaterialien hergestellt, wie beispielsweise aus Holzschliff oder Stärkematerial. Die Produktionsgrenzen wurden jedoch ziemlich schnell erreicht, da die Rohstoffe nicht in ausreichendenm Ausmaß zur Verfügung standen bzw. nicht schnell genug nachwuchsen. Ein bereits in praktisch unbegrenzter Menge zur Verfügung stehender bzw. in maritimen Farmbetrieben gezielt anbaubarer Rohstoff sind Algen. Aus diesen Algen können Alginate bzw. Alginsäure gewonnen werden, welche zu Schaumstoffen weiterverarbeitbar sind.

Gemäß der GB-560 317-A werden derartige Schaumstoffe niedriger Dichte durch Belüften einer wässerigen Lösung von Natriumalginat und gleichzeitiges Überführen des löslichen Alginats in eine unlösliche Form hergestellt.

In der US-5 718 916 werden Alginatschäume geoffenbart, welche als Wundauflage, bei chirurgischen Eingriffen und als Implantate Verwendung finden.

Die EP-0 747 420-A1 beschreibt ein Verfahren zur Herstellung von Polysaccharidschäumen, wobei die Schäume im feuchten Zustand geformt und anschließend in einem warmen Luftstrom getrocknet werden.

Auch in der WO 94/00512 werden Schäume auf Basis von löslichen Polysacchariden, wie Alginaten, Hyaluronaten, Carrageenaten oder Stärke beschrieben, gemäß der JP-4911 99 62-A werden Calciumalginatschäume in Gegenwart einer stärkeren Säure als Kohlensäure, etwa Salzsäure, hergestellt.

JP-92 78 926-A beschreibt die Herstellung eines gaspermeablen Films ausgehend von einer wässerigen Lösung von Alginsäure.

All diesen Verfahren ist gemeinsam, daß das Ausgangsprodukt zuerst mühsam aus dem natürlichen Rohstoff isoliert werden muß.

In der WO 94/17132 werden aufgeschäumte Algenprodukte mit einer aufgeschäumten und im wesentlichen dimensionsstabilen Algenfasermatrix zu Verpackungszwecken geoffenbart. Zur Herstellung dieser Produkte werden ausschließlich Grünalgen (Chlorophyceae), insbesondere *Cladophora glomerata Kuetzing*, verwendet. Zum Aufschäumen wird ein Brei von Grünalgen herkömmlichen Schäumverfahren zur Herstellung von zellulären Plastikschäumen unterworfen, beispielsweise Isocyanat-Techniken, Verdampfen von verschiedenen Komponenten des Algenbreis, Vakuumexpansion von im Algenbrei gelösten Gasen, Einschlagen von Gasen in den Algenbrei und Lösen von Kristallen oder anderen kleinen Teilchen im Brei und, nach Stabilisation des Schaums, Entfernung derselben.

In den der vorliegenden Erfindung zugrundeliegenden Diplomarbeiten von Manfred Winter und Thomas Strasser, Februar 1994, TU-Graz, wurden Braunalgen (Phaeophycea) zur Verwendung als Rohstoffe für Verpackungsmaterialien untersucht, da Braunalgen aufgrund des Algingehalts ihrer Zellwände von besonderem Interesse sind.

Algin ist ein Strukturelement der Zellwand von Braunalgen, in welchen es als wasserlösliches Alkali- oder Erdalkali-Salz vorliegt. Es wurde im Jahre 1880 vom englischen Chemiker Stanford erstmals extrahiert, der auch den Namen Algin für die wasserlösliche Substanz im Natriumcarbonat-Extrakt und Alginsäure für die daraus mit Säure fällbäre Substanz prägte.

Bis 1954 nahm man an, daß Algin eine reine Polymannuronsäure sei. Erst im Jahre 1955 fanden Fisher und Dörfel in Hydrolysaten neben D-Mannuronsäure auch noch L-Guluronsäure, und seit ungefähr 1964 weiß man, daß es sich bei der Alginsäure um ein Copolymer der beiden Uronsäuren handelt, in welchem prinzipiell drei Strukturelemente vorkommen, nämlich reines α-1,4-L-Guluronan, reines β-1,4-D-Mannuronan und ein Polyuronid, in welchem die Guluron- und Mannuronsäure-Monomere abwechseln.

Alginate sind unverzweigte Kettenmoleküle. Ihre Eigenschaften werden weitgehend durch das Verhältnis der drei Strukturelemente im Molekül bestimmt. Dieses Verhältnis ist durch die Algenart gegeben, aus welcher das Alginat extrahiert wird.

Über die Herkunft der verschiedenen Algenextrakte und die allgemeine Klassifikation soll die Tabelle 1 Auskunft geben. In dieser Tabelle ist neben der Herkunft des Algins auch noch die Herkunft von Carrageenan und Agar gegeben, welche ebenso in verschiedenen Industriezweigen Verwendung finden. Für die Herstellung von Algin sind auch die Algenarten mit wirtschaftlicher Bedeutung angegeben.

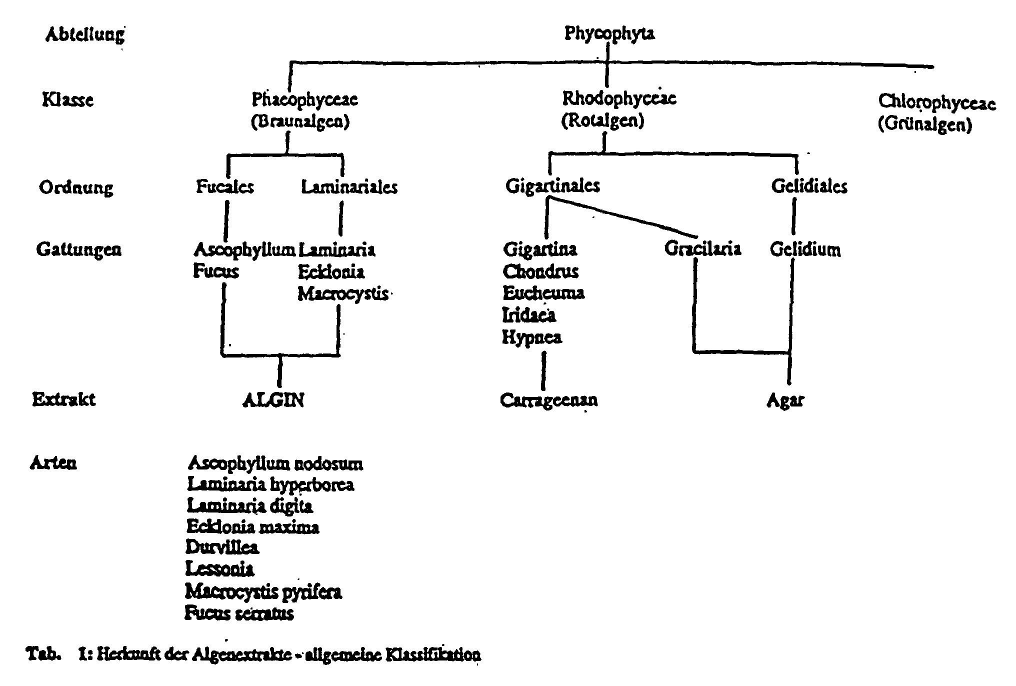

Allgemein sind die Algen, je nach Art und Jahreszeit, folgendermaßen aufgebaut

| | |
|---|---|
| Wasser | 75 - 90% |
| Trockenmasse | 10 - 25% |

Wobei die Trockenmasse wiederum aus folgenden Bestandteilen aufgebaut ist:

| | |
|---|---|
| Alginsäure | 10 - 40% |
| Cellulose | 15 - 40% |
| Mannit | 10 - 20% |
| Laminarin | 10 - 20% |
| Kohlenhydrate | 16 - 23% |
| Eiweiß | 5 - 15% |
| Fette | 1 - 2% |
| verschiedene Salze | in Spuren |
| Vitamine | in Spuren |
| Toxine | in Spuren |
| verschiedene organische Verbindungen | in Spuren |

In der Tabelle 2 ist für verschiedene Braunalgenarten (lat. Phaeophyceae) der Alginsäuregehalt und das Verhältnis von Mannuronan zu Guluronan, das ja die Eigenschaften des Alginates bestimmt, angegeben.

**Tab. 2:**

| **Alginsäuregehalt und Verhältnis Mannuronan zu Guluronan verschiedener Braunalgenarten** | | |
|---|---|---|
| **Arten** | **% Alginsäure in der Trokkenmasse** | **Mannuronan: Guluronan** |
| Macroxystis pyrifera | 13 - 24 | 1,4 - 1,8 |
| Ascophyllum nodosum | 20 - 30 | 1,4 - 1,9 |
| Laminaria digitata | 15 - 27 | 1,3 - 1,6 |
| Laminaria (Blatt) | 15 - 26 | 1,3 - 6,0 |
| Hyperborea (Stengel) | 27 - 33 | 0,4 - 1,0 |
| Ecklonia maxima | 30 - 38 | 1,4 - 1,8 |

Ziel des erfindungsgemäßen Verfahrens ist die Herstellung eines neuen Schaumstoffes auf Basis von nachwachsenden Rohstoffen mit einem ausreichenden Gehalt an Alginat, insbesondere auf Basis von Braunalgen, wobei der Schaumstoff verbesserte biologische Abbaubarkeit, geringe Dichte und die Möglichkeit, durch verschiedene Zusätze unterschiedliche Eigenschaftsveränderungen zu erzielen, aufweisen soll. Besonders in der biologischen Abbaubarkeit liegt ein wesentlicher Unterschied der erfindungsgemäß hergestellten Schaumstoffe zu Schaumstoffen aus Erdölfolgeprodukten. Die Einsatzmöglichkeiten der erfindungsgemäß hergestellten Schaumstoffe entsprechen dem bisherigen Verwendungszweck von Schaumstoffen und liegen hauptsächlich im Verpackungs- und im Dämmstoffbereich.

Diese Aufgabe wird erfindungsgemäß durch die Kombination der folgenden verfahrensschritte gelöst:
- Aufbereitung von Rohstoffen mit einem Mindestgehalt von 3 %-Masse Alginat ohne zwischenzeitliches Isolieren des Alginats durch einfaches Zerkleinern und Waschen des Rohstoffes mit Wasser sowie Zugabe von Natriumcarbonat und Wasser zu einer ersten Reaktionslösung enthaltend wasserlösliches Alginat und Bereitstellung einer Calciumionenquelle in Form einer zweiten Reaktionslösung,
- Sättigung zumindest einer Reaktionslösung mit einem Aufschäummedium,
- Vereinigung der Reaktionslösungen unter Bildung eines wasserunlöslichen Calciumalginats bei gleichzeitigem Aufschäumen,
- Trocknung,
- Formgebung
sowie gegebenenfalls einer Nächbehandlung entsprechend dem spezifischen Verwendungszweck.

Überraschenderweise wurde gefunden, daß bei Verwendung von Rohstoffen mit einem Mindestgehalt von 3 %-Masse Alginat als Ausgangsprodukt, wie beispielsweise Braunalgen (Phaeophycea), insbesondere Braunalgen der Ordnung Fucales und/oder Laminariales bzw. der Gattungen Ascophyllum, Pucus und Laminaria, Ecklonia sowie Macrocystis beziehungsweise Mischungen dieser Algen, auf die teure und aufwendige Isolierung des Alginats verzichtet und der Rohstoff als solches eingesetzt werden kann. Die obgenannten Rohstoffe weisen im allgemeinen einen Alginatgehalt zwischen 4 und 12 %-Masse auf, wobei es jedoch je nach Herkunft der Rohstoffe und Zeitpunkt der Ernte zu Schwankungen im Alginatgehalt kommen kann.

Im erfindungsgemäßen Verfahren wird der Rohstoff, z.B. Braunalgen, nach entsprechender Aufbereitung als solcher eingesetzt, wobei die Lösung bzw. Suspension danach sofort aufgeschäumt werden kann.

Die Vorbehandlung besteht in einem einfachen Zerkleinern und Waschen des Rohstoffes mit Wasser sowie in der Zugabe von Natriumcarbonat und Wasser. Durch diese Zugabe wird das unlösliche Alginat im Rohstoff in wasserlösliches Natriumalginat umgewandelt. Die Umwandlung kann dabei durch Rühren bei Raumtemperatur oder auch bei erhöhter Temperatur erfolgen.

Für die spätere chemische Reaktion ist die Bereitstellung einer Calciumionen-Quelle erforderlich. Vorzugsweise wird dabei erfindungsgemäß eine Lösung von Calciumchlorid verwendet. Zur Herstellung der Reaktionslösungen sind Lösungsmittel erforderlich, wobei vorzugsweise Wasser zur Anwendung kommt; es ist jedoch auch die Verwendung von Gemischen von Wasser mit mischbaren organischen Lösungsmitteln, wie Wasser/Aceton-Mischungen, möglich.

Zu den Reaktionslösungen werden vorzugsweise schon während der Bereitstellung diverse Zusatzstoffe (eine genaue Spezifikation dieser Stoffe erfolgt nachfolgend) zugemischt. Es ist jedoch auch denkbar, die Zusätze in einem späteren Prozeßschritt zuzusetzen.

Zusatzstoffe können notwendig sein, um für den Schaumstoff bestimmte Eigenschaften zu erzielen, der Schaumstoff kann jedoch auch ohne einen Zusatzstoff produziert werden. Verwendet werden vorzugsweise (einzeln oder in Kombination):
- Fasermaterialien, wie Flachs oder Hanf, Zellstoff bzw. Zellulose als Strukturgeber und für verbessertes Dämpfungsverhalten,
- Latex für eine bessere Elastizität,
- Stärke als Füllmaterial und Verbundsubstanz,
- Schaumstabilisatoren und Schaumbildner, z.B. Triton, Dioctylsulfosuccinat, Laurinsäure-Dimethylamid, Laurylsulfat, etc.,
- Farbstoffe, Pigmente,
- Biozide (Fungizide etc.),
- Antioxidantien,
- flammenhemmende Stoffe,
- Harze als Verbundsubstanz und Beschichtungsmaterial,
- Füllstoffe, zum Beispiel CaCO₃, Na₂CO₃, Sägespäne, etc.,
- UV-Stabilisatoren,
- Hitze-Stabilisatoren,
- Viskositäts-"Regler" für verbesserte Schaumbildung und Schaumstabilisation,
- wasserabstoßende Substanzen,
- Antistatika sowie
- Gleit- und Schmiermittel.

Zur Herstellung des Schaumstoffes ist es notwendig, im Verlauf des Prozesses zumindest einer der Reaktionslösungen ein festes, flüssiges oder gasförmiges Aufschäummittel, beispielsweise Luft, Stickstoff, CO₂ und dgl. beizugeben. Diese Beigabe erfolgt geeigneterweise ebenfalls schon bei der Aufbereitung der Rohstoffe, kann aber auch in einem nachfolgenden Verfahrensschritt durchgeführt werden. Als besonders günstiges festes Aufschäummittel hat sich Natriumhydrogencarbonat erwiesen, da dadurch ein zusätzliches Aufschäumen beim Trocknen bewirkt werden kann.

Vorzugsweise wird zumindest eine der Reaktionslösungen mit Luft unter Druck gesättigt, wobei das Aufschäumen durch ein Entspannen der Reaktionslösung und der damit verbundenen Freisetzung der gelösten Luft erfolgt.

Im Verlauf des Aufschäumvorganges werden die Reaktionslösungen zusammengeführt. Es kommt dabei zu einem Ionenaustausch zwischen der Algen- bzw. Alginat- und der Calciumionenquelle bzw. -lösung. Das Ergebnis ist die Bildung eines Calciumalginats, welches durch das Aufschäummittel sofort in einen Calciumalginatschaum verwandelt wird.

Gemäß einer bevorzugten Ausführungsform des erfindungsgemäßen Verfahrens wird der gebildete Schaumstoff vor der Trocknung einer Verdrängungswäsche unterzogen. Der gebildete Calciumalginatschaum enthält eine große Menge Wasser in seinen Poren eingeschlossen, was sich nachteilig auf den Trocknungsvorgang auswirkt (längere Trocknungszeit, Beschaffenheit des trockenen Schaumstoffes). In einer derartigen Verdrängungswäsche wird das Wasser im Schaum zum größten Teil durch organische Lösungsmittel bzw. Lösungsmittelgemische ersetzt, welche mit Wasser ein Azeotrop bilden und einen verhältnismäßig niedrigen Siedepunkt aufweisen, beispielsweise Aceton. Der so entstandene lösungsmittelhältige Calciumalginatschaum läßt sich nun aufgrund der leichteren Flüchtigkeit des bzw. der organischen Lösungsmittel(s) im nachfolgenden Trocknungsschritt viel schneller und effizienter trocknen.

Im Trocknungsschritt geht es primär darum, dem Schaumstoff das verwendete Lösungsmittel durch ein geeignetes Trocknungsverfahren zu entziehen. In Frage kommen dabei insbesondere Mikrowellen-, Kontakt-, Konvektions-, z.B. Wirbelschicht-, Strahlungs-, und Vakuumtrocknungsverfahren, wobei auch Kombinationen dieser Trocknungsverfahren möglich sind. Ein mechanisches Auspressen des erhaltenen Schaumstoffes ist auch möglich, insbesondere bei Verwendung von Natriumhydrogencarbonat als festes Aufschäummittel, da durch das zusätzliche Aufschäumen beim Trocknen ein eventueller Volumsverlust durch das mechanische Auspressen ausgeglichen werden kann.

Die anschließende Formgebung kann während der Aufschäumung beziehungsweise auch zu einem späteren Zeitpunkt durchgeführt werden. Die Formgebung richtet sich vor allem nach der Art der produzierten Schaumstoffe. Werden beispielsweise Partikel, z.B. Kügelchen oder Chips, erzeugt, so können diese unter Verwendung geeigneter Verbundsubstanzen in jede beliebige Form gebracht werden. Wird eine Rohform erzeugt, so muß diese entsprechend der gewünschten Endform nachbearbeitet werden. Eine dritte Möglichkeit besteht darin, fertige Endformen auszuschäumen.

Der Schaumstoff kann auch entsprechend behandelt werden, um gewisse Eigenschaftsveränderungen zu erzielen. Beispielsweise sei hier eine Hydrophobierung des Schaumstoffes genannt. Es besteht keine technische Limitierung, in welcher Verfahrensstufe diese Behandlung durchzuführen ist.

Beschichtungen werden vor allem dazu verwendet, um den Schaumstoff gegenüber äußeren Einflüssen in der gewünschten Art und Weise zu schützen, beziehungsweise um gewisse optische Eigenschaften zu erzielen. Verwendet werden dabei vorzugsweise (einzeln oder in Kombination miteinander) Wachsemulsionen, Naturharze und/oder Farbstoffe.

Wie bereits erwähnt, gibt es die Möglichkeit, drei verschiedene Arten von Schaumstoffen zu erzeugen.
a) Herstellung von Einzelpartikeln
b) Herstellung von Fertigformen
c) Herstellung von Rohformen

Bevor nun, stellvertretend für die im Anhang angeführten Verfahrensschemata, zwei mögliche Herstellungsprozesse detailliert beschrieben werden, soll zusammenfassend noch einmal festgehalten werden:
* Als Ausgangsprodukte dienen Rohalgen, welche überraschenderweise direkt zur Schaumstoffproduktion eingesetzt werden können.
* Es können verschiedenste Lösungsmittelgemische auf wässeriger Basis zum Einsatz kommen.
* Der Schaumstoff kann gänzlich ohne Zusatzstoffe produziert werden. Sollen jedoch, je nach Verwendungszweck, bestimmte Eigenschaften erzielt werden, so kann man die benötigten Zusatzstoffe prinzipiell in jedem Verfahrensschritt zugeben, vorzugsweise jedoch der Algenlösung bzw. -suspension, der Ca-Ionen-Lösung sowie den kombinierten Reaktionslösungen vor dem Aufschäumen.
* Das Aufschäummittel kann sowohl der Algenlösung bzw. -suspension, der Ca-Ionen-Lösung als auch mit jedem anderen Stoffstrom von Zusatzstoffen zugesetzt werden. Das kann vor der chemischen Reaktion der Calciumalginatbildung, während der Reaktion oder auch nach der Reaktion in beliebiger Form durchgeführt werden.

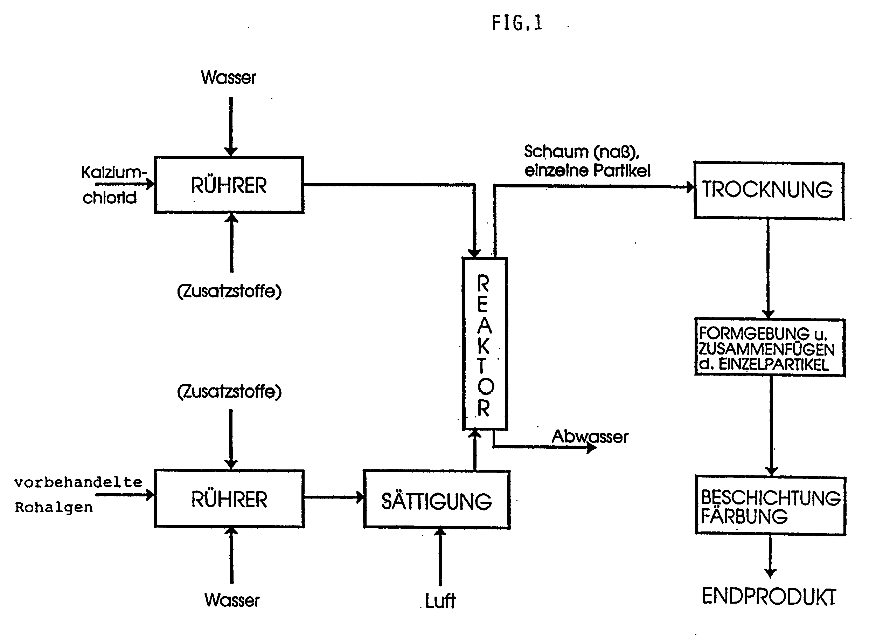

Ein mögliches Verfahrensschema zur Herstellung von Schaumstoffen, die aus Einzelpartikeln zusammengesetzt sind, ist in Fig. 1 dargestellt.

In diesem Fall dienen rohe Braunalgen als Ausgangsprodukt. Als Calciumionenquelle wird Calciumchlorid (CaCl₂) verwendet, Wasser stellt das Lösungsmittel dar und als Aufschäummedium kommt Luft zur Anwendung. Eventuell benötigte Zusatzstoffe können sowohl der NaAlg-Lösung als auch der CaCl₂-Lösung beigemengt werden.

In einer Rühreinheit wird eine wässerige CaCl₂-Lösung bereitgestellt, die mit Zusatzstoffen versetzt werden kann. In einem zweiten, separaten Rührer wird eine wässerige Lösung bzw. Suspension von wie vorstehend beschrieben vorbehandelten rohen Braunalgen bereitgestellt, die ebenfalls mit Zusatzstoffen versetzt werden kann. Diese Lösung wird unter Druck mit Luft gesättigt. Der Reaktor wird nun mit der CaCl₂-Lösung beschickt. Am Reaktorboden ist eine Lochplatte eingebaut, in der die Algenlösung bzw. -suspension in den Reaktor eingebracht wird.

Abhängig vom Lochdurchmesser und der Lochgeschwindigkeit können verschiedene Partikelgrößen erreicht werden. Zusätzlich kann die Partikelgröße aber auch über eine Schereinrichtung eingestellt werden.

Unmittelbar nach dem Eintritt in den Reaktor reagiert das in der Algenlösung vorhandene Natriumalginat mit der CaCl₂-Lösung. Dabei findet zwischen beiden Reaktionslösungen ein Ionenaustausch statt, das heißt die Natrium-Ionen des Natriumalginats werden durch die Calcium-Ionen der CaCl₂-Lösung ersetzt. Gleichzeitig wird die unter Druck mit Luft gesättigte Lösung auf Atmosphärendruck entspannt. Die freiwerdenden freien Luftbläschen werden dabei von CaAlg₂ umhüllt.

Dieses Zweiphasensystem bildet einen CaAlg₂-Schaum in Partikelform, der einem anschließenden Trocknungsprozeß zugeführt wird. Im Anschluß daran werden die Einzelpartikel mit entsprechenden Verbindungsmitteln zu beliebigen Agglomeraten geformt. Abschließend kann, soweit das noch nicht geschehen ist, ein Beschichtungs- und/oder Färbungsschritt nachgeschaltet werden.

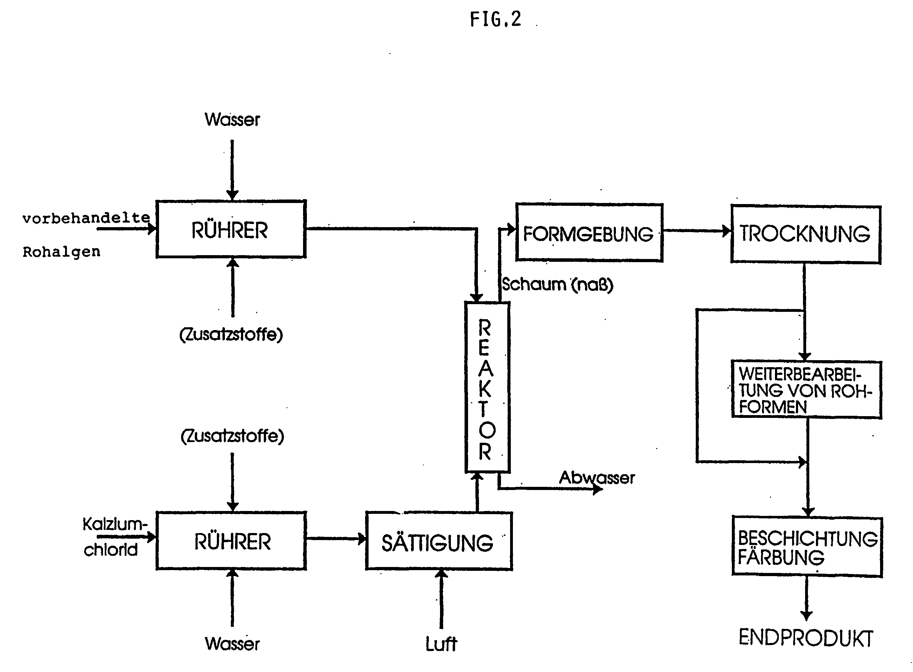

Ein möglicher Verfahrensweg zur Herstellung von Fertigformen bzw. von Rohformen ist in Fig. 2 dargestellt.

Auch in diesem Beispiel werden Braunalgen enthaltend Natriumalginat (NaAlg) und Calciumchlorid (CaCl₂) als Rohstoffe verwendet. Ebenso dient Luft als Aufschäummedium und Wasser als Lösungsmittel. Die eventuell benötigten Zusatzstoffe können wiederum sowohl der Algenlösung als auch der CaCl₂ -Lösung beigemengt werden.

In zwei separaten Rührereinheiten wird eine wässerige Algenlösung bzw. -suspension und eine wässerige CaCl₂-Lösung hergestellt. Die Zusatzstoffe werden bereits in dieser Verfahrensstufe zugeführt.

In einem nächsten Schritt wird die CaCl₂-Lösung unter Druck mit Luft gesättigt. Der Reaktor wird mit der Algensuspension befüllt, über Düsen im Boden des Reaktors wird die mit Luft gesättigte Lösung dem Reaktor zugeführt. Unmittelbar nach dem Eintritt in den Reaktor reagiert das in der Algensuspension enthaltene NaAlg mit der CaCl₂-Lösung. Dabei findet zwischen beiden Reaktionslösungen ein Ionenaustausch statt, das heißt die Natrium-Ionen der Alginatlösung werden durch die Calcium-Ionen der CaCl₂-Lösung ersetzt. Gleichzeitig wird die unter Druck mit Luft gesättigte CaCl₂-Lösung auf Atmosphärendruck entspannt. Die freiwerdenden Luftbläschen werden dabei von CaAlg₂ umhüllt.

Dieses Zweiphasensystem wird zu einem CaAlg₂-Produkt aufgeschäumt, das entweder schon fertige Formen oder eine Rohform ausfüllt, die in einer späteren Formgebungsstufe in die endgültige Form gebracht wird. In dem der Verdrängungswäsche nachfolgenden Trocknungsprozeß wird dem Schaum dann das Lösungsmittel entzogen. Vor einem eventuellen Beschichtungs- und/oder Färbungsschritt werden die Rohformen noch nachbearbeitet.

Besonders günstig ist auch, wenn beide Lösungen, also sowohl die Algenlösung bzw. Suspension als auch die CaCl₂-Lösung unter Druck mit einem gasförmigen Aufschäummittel gesättigt wurden.

Der Hauptunterschied zwischen dem erfindungsgemäß hergestellten Alginatschaumstoff und den nach Stand der Technik produzierten herkömmlichen Schaumstoffen liegt vor allem darin, daß der erfindungsgemäße Schaumstoff auf kostengünstige Weise und einfach aus nachwachsenden Rohstoffen produziert wird.

Es werden also somit keine kostbaren Ressourcen weiter belastet, sondern es wird auf Rohstoffkapazitäten zurückgegriffen, die sich in kurzer Zeit regenerieren. Aus der Verwendung eines nachwachsenden und damit natürlichen Rohstoffes resultiert ein weiterer wesentlicher Unterschied zu den marktüblichen Schaumstoffen. Der erfindungsgemäße Schaumstoff ist weiters im Prinzip - d.h. in Abhängigkeit der verwendeten Zusatzstoffen - biologisch abbaubar, wodurch sich bezüglich einer späteren Entsorgung des Produktes große Vorteile ergeben. Die Natürlichkeit des Materials erweist sich außerdem in allen Anwendungen von Vorteil, in denen Wert auf "biologische" Materialien gelegt wird (z.B. Schaumstoffmatratzen aus gesunden, natürlichen Materialien).

Der erfindungsgemäße Schaumstoff weist Dichten im Bereich von ca. 35 bis 40 kg/m³ auf, wobei diese Werte natürlich auch von Zusatzstoffen abhängen und in einem weiten Bereich variiert werden können. Hinsichtlich der Wärmeleitfähigkeit können Werte von 0,04 bis 0,05 W/mK) erreicht werden.

Der Verwendung des erfindungsgemäß hergestellten Schaumstoffes sind im Prinzip keine Grenzen gesetzt. Im folgenden werden einige besonders bevorzugte Gebiete herausgegriffen:

### Verpackungsbereich:

Der nach dem erfindungsgemäßen Verfahren produzierte Schaumstoff deckt in seiner Eignung prinzipiell den gesamten Verpakkungsbereich ab. Es ergeben sich also keinerlei Einschränkungen bezüglich einer Verwendung als Verpackungsmaterial. Es ist unter anderem vorstellbar, daß beispielsweise Verpackungen für den Bereich elektronischer Güter aus dem neuen Schaumstoff bestehen. Aufgrund des weltweiten Handels mit elektronischen Gütern ist es unbedingt erforderlich, das dieses Verpackungsmaterial in seinen Eigenschaften allen Klimazonen der Erde entspricht. Die zum Teil extrem hohen Anforderungen an das Verpackungsmaterial werden von dem erfindungsgemäßen Schaumstoff voll erfüllt. Außerdem ist es mit dem erfindungsgemäßen Material auch möglich, ein mehrschichtiges Verpackungsmaterial zu erzeugen, wobei ein Teil dieser Schichten dazu dient, die Festigkeit des Materials hinsichtlich mechanischer Beanspruchung zu gewährleisten, während beispielsweise der andere Teil aufgrund bestimmter Zusätze zum Schaumstoff stoßdämpfende Eigenschaften besitzen kann.

### Thermische Isolation:

Ein weiterer interessanter Anwendungsfall ergibt sich aus der Porenstruktur des erfindungsgemäß hergestellten Schaumstoffes. Aufgrund der in der Festkörperstruktur eingeschlossenen Gase ist es möglich, den Schaumstoff auch im Dämmstoffbereich einzusetzen, beispielsweise in der Bauindustrie. Gerade hier ist in letzter Zeit ein verstärkter Trend zu natürlichen Materialien feststellbar.

### Elektrische Isolation:

Gemäß der chemischen Struktur des erfindungsgemäß hergestellten Schaumstoffes ist es prinzipiell möglich, den neuen Schaumstoff auch als elektrisches Isolationsmaterial in der Elektroindustrie zu verwenden.

### Elastische Schaumstoffe:

In diesen Bereich fallen Anwendungsbereiche wie in der Möbelindustrie (Polsterschaumstoffe, umweltfreundliche Matratzen, etc.) oder auch in der Autoindustrie (aufgeschäumte Verkleidungselemente, etc.) und andere, wobei die durch entsprechende Zusatzstoffe hervorgerufene Elastizität des Materials diese Anwendungen ermöglicht.

### Formteile:

Aufgrund der Möglichkeit, den erfindungsgemäßen Schaumstoff in jede beliebige Form zu bringen und für jeden speziellen Anwendungsfall entsprechende Eigenschaften durch Zugabe von Zusatzstoffen zum Schaumstoff sicherzustellen, ergeben sich hier vielfältigste Anwendungsbereiche, beispielsweise in der Automobil- und Flugzeugindustrie.

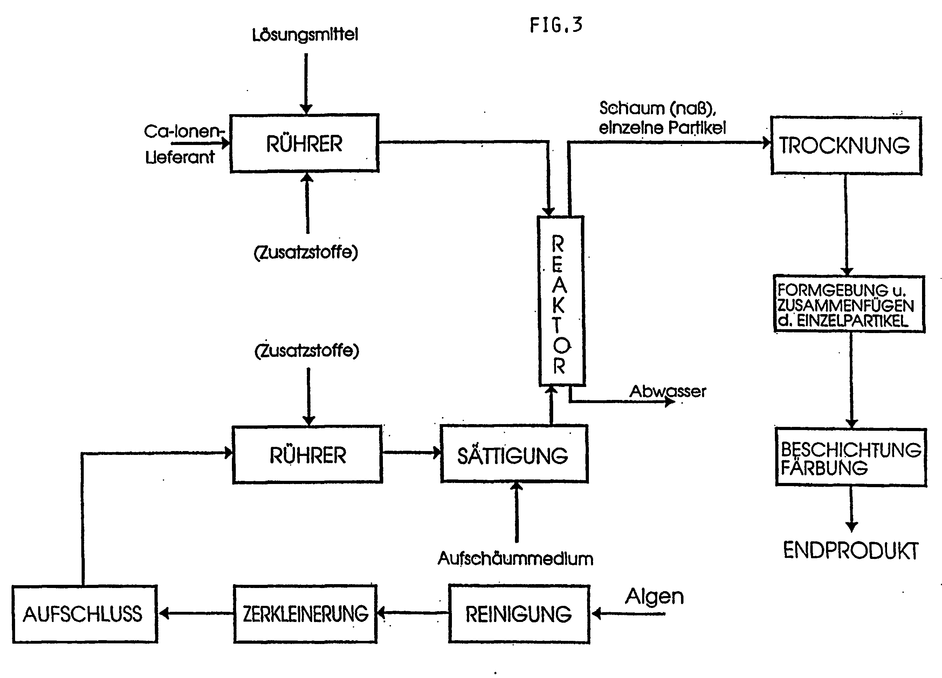

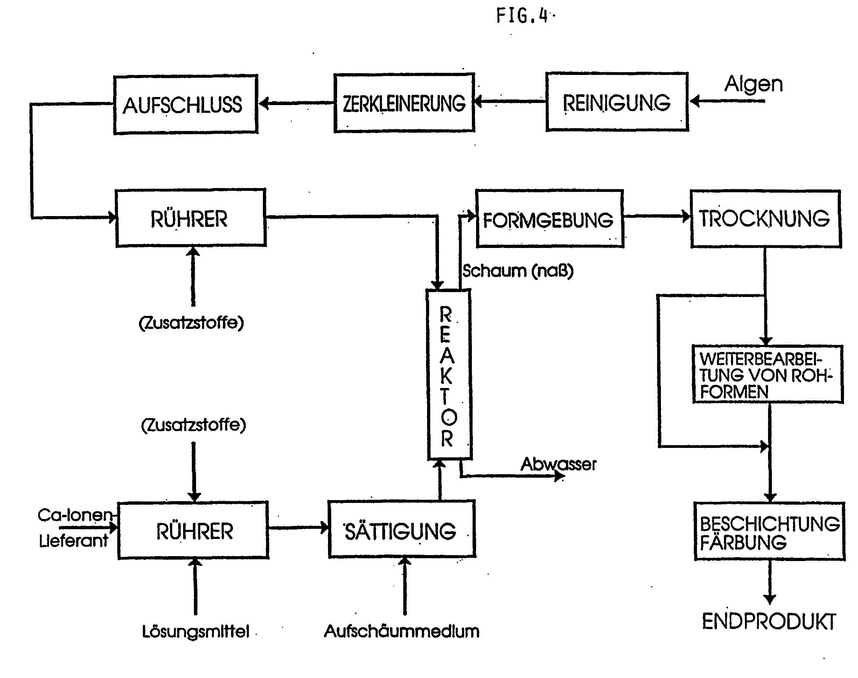

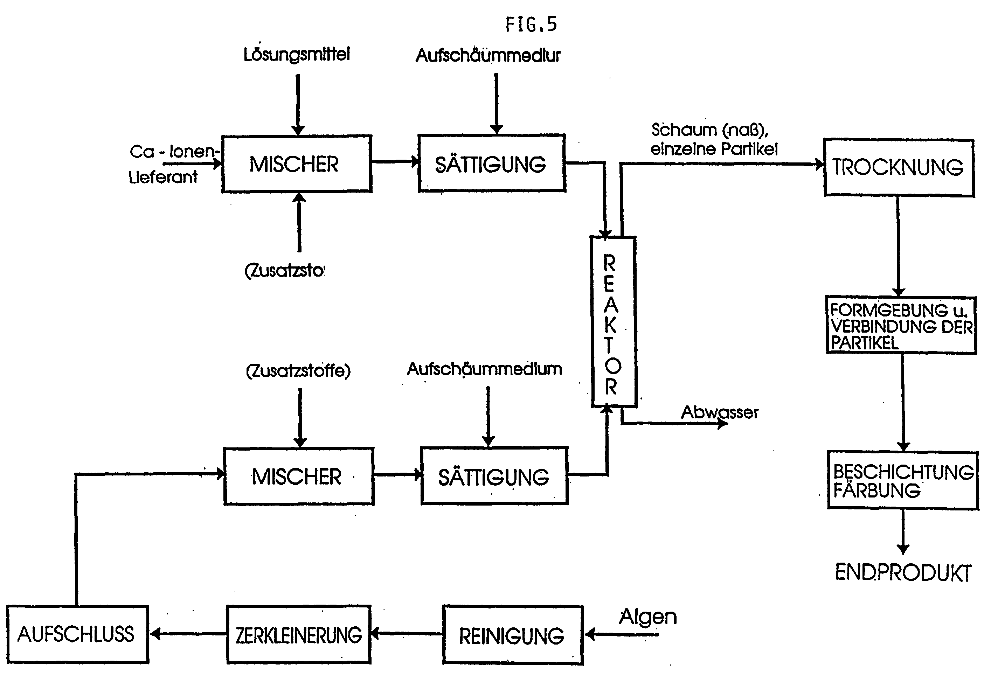

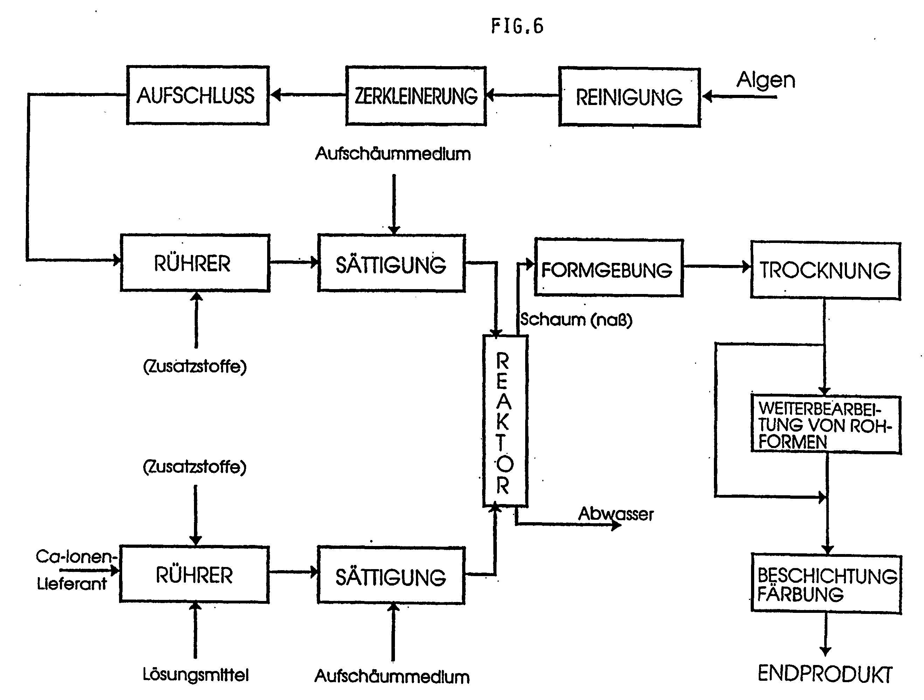

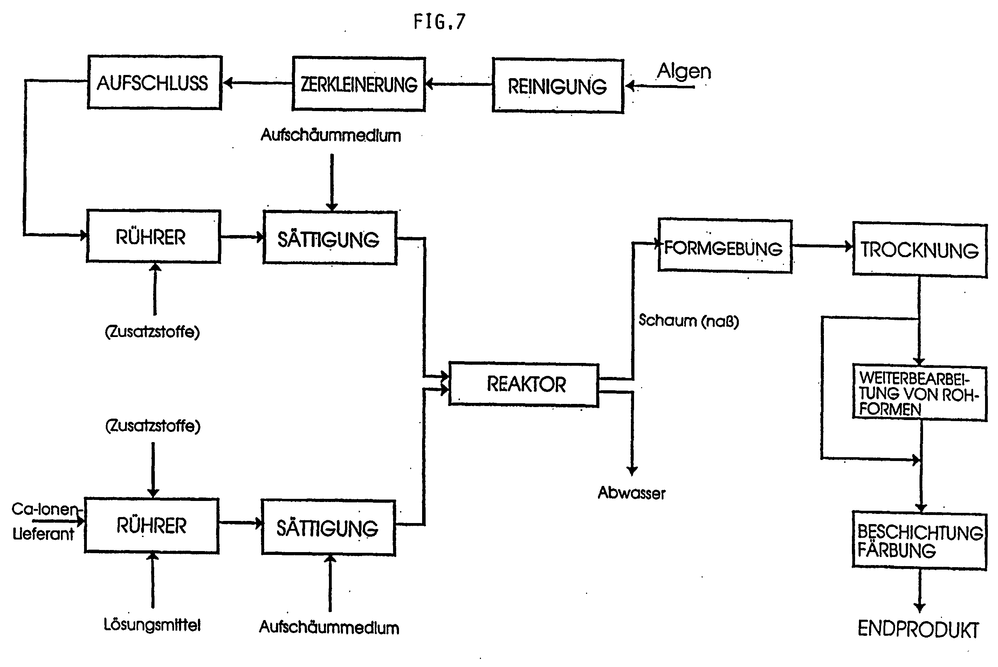

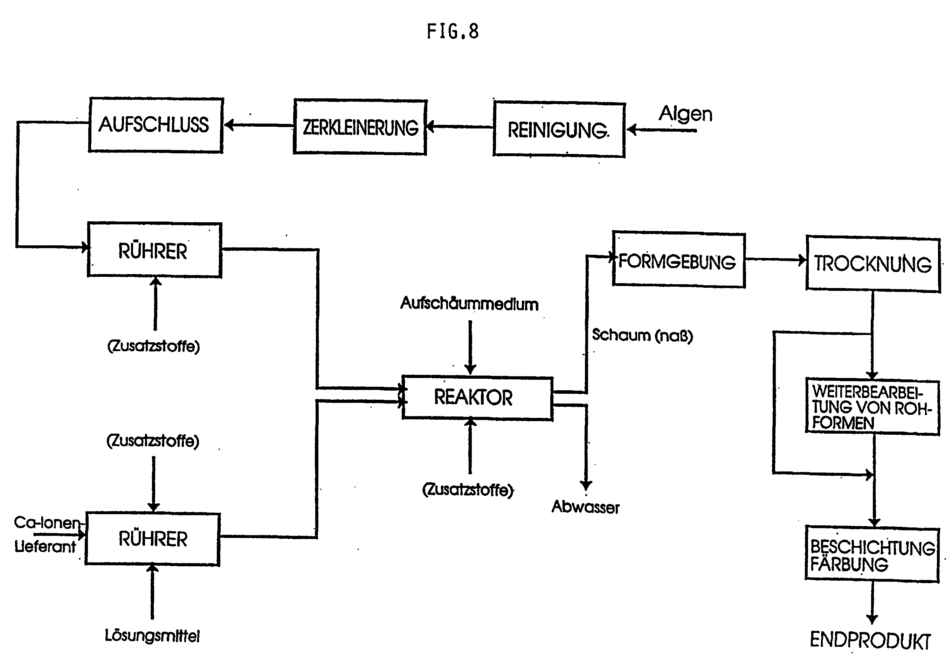

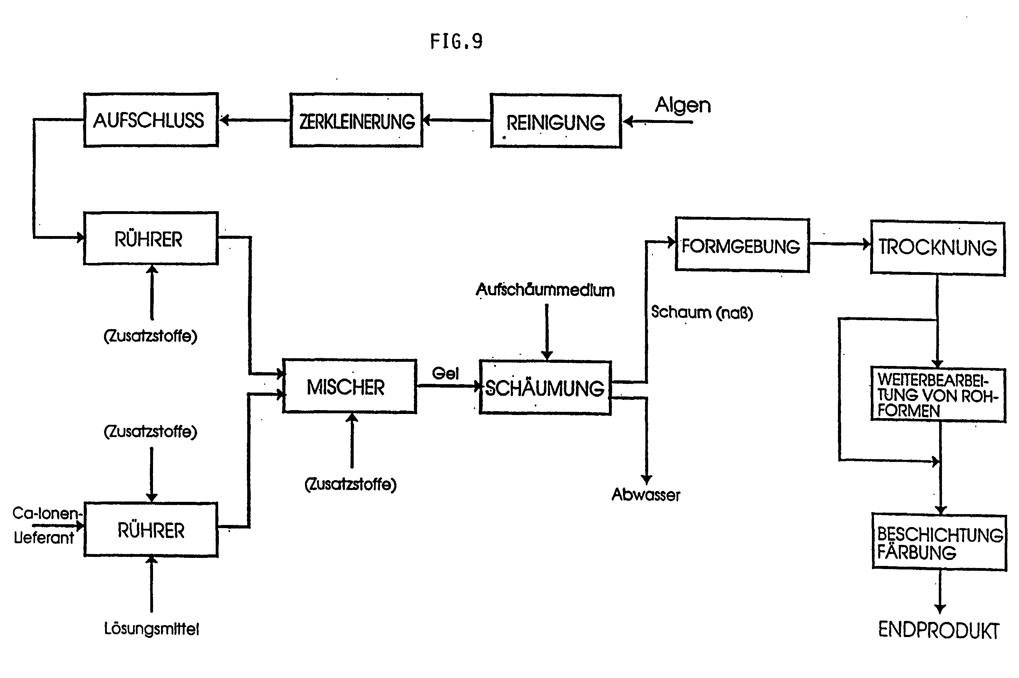

In den Fig. 3 bis 9 der beiliegenden Zeichnungen werden eine Reihe von weiteren Varianten für das erfindungsgemäße Verfahren geoffenbart. Als Ausgangsprodukt wurde eine Mischung von Braunalgen der Gattungen Fucus und Laminaria eingesetzt, die Probenvorbehandlung erfolgte durch Zerkleinern von etwa 125 g der Algen in etwa zentimetergroße Stücke, Waschen (3 x mit je 1800 ml Leitungswasser), dann Zugabe von etwa 20 g Na₂CO₃ und 1800 ml Wasser. Je nach verwendeter Temperatur war die Vorbehandlung nach 60 min (bei Kochtemperatur) bzw. zwischen 6 und 24 Stunden (Raumtemperatur) abgeschlossen.

### Fig 3:

### Ausgangsprodukt: Braunalgen

Die Algen-Lösung wird mit dem Aufschäummedium gesättigt. Diese wird in die CaIonen-Lösung eingedüst und sofort entspannt. Zusatzstoffe können an beliebiger Stelle zugeführt werden, vorzugsweise jedoch in der Mischereinheit. Beschichtung und/oder Färbung können, wenn notwendig, sowohl vor als auch nach der Trocknung durchgeführt werden.

### Fig 4:

### Ausgangsprodukt: Braunalgen

Die Ca-Ionen-Lösung wird mit dem Aufschäummedium gesättigt. Diese wird in die Algen-Lösung eingedüst und sofort entspannt. Zusatzstoffe können an beliebiger Stelle zugeführt werden, vorzugsweise jedoch in der Mischereinheit. Beschichtung und/oder Färbung können, wenn notwendig, sowohl vor als auch nach der Trocknung durchgeführt werden.

### Fig 5:

### Ausgangsprodukt: Braunalgen

Sowohl die Algen-Lösung als auch die Ca-Ionen-Lösung werden mit dem Aufschäummedium gesättigt. Die Algen-Lösung wird anschließend in die Ca-Ionen-Lösung eingedüst. Nach der Reaktion wird entspannt. Zusatzstoffe können an beliebiger Stelle zugeführt werden, vorzugsweise jedoch in der Mischereinheit. Beschichtung und/oder Färbung können, wenn notwendig, sowohl vor als auch nach der Trocknung durchgeführt werden.

### Fig 6:

### Ausgangsprodukt: Braunalgen

Sowohl die Algen-Lösung als auch die Ca-Ionen-Lösung werden mit dem Aufschäummedium gesättigt. Die Ca-Ionen-Lösung wird anschließend in die Algen-Lösung eingedüst. Nach der Reaktion wird entspannt. Zusatzstoffe können an beliebiger Stelle zugeführt werden, vorzugsweise jedoch in der Mischereinheit. Beschichtung und/oder Färbung können, wenn notwendig, sowohl vor als auch nach der Trocknung durchgeführt werden.

### Fig 7:

### Ausgangsprodukt: Braunalgen

Sowohl die Algen-Lösung als auch die Ca-Ionen-Lösung werden mit dem Aufschäummedium gesättigt. Die Ca-Ionen-Lösung und die Algen-Lösung werden anschließend gemeinsam in den Reaktor eingedüst und dort sofort entspannt. Zusatzstoffe können an beliebiger Stelle zugeführt werden, vorzugsweise jedoch in der Mischereinheit. Beschichtung und/oder Färbung können, wenn notwendig, sowohl vor als auch nach der Trocknung durchgeführt werden.

### Fig 8:

### Ausgangsprodukt: Braunalgen

Die Algen-Lösung und die Ca-Ionen-Lösung werden gemeinsam in den Reaktor geführt. Im Reaktor selbst wird das Aufschäummedium zugesetzt. Zusatzstoffe können an beliebiger Stelle zugeführt werden, vorzugsweise jedoch schon in der Rührereinheit. Beschichtung und/oder Färbung können, wenn notwendig, sowohl vor als auch nach der Trocknung durchgeführt werden.

### Fig 9:

### Ausgangsprodukt: Braunalgen

Die Algen-Lösung und die Ca-Ionen-Lösung werden gemeinsam in einen Mischer bzw. Rührer geführt. Das daraus resultierende Gel wird danach einem Aufschäumprozeß zugeführt. Zusatzstoffe können an beliebiger Stelle zugeführt werden, vorzugsweise jedoch schon in den Rührer- bzw. Mischereinheiten. Beschichtung und/oder Färbung können, wenn notwendig, sowohl vor als auch nach der Trocknung durchgeführt werden.

## Patentansprüche

1. Verfahren zur Herstellung eines Schaumstoffes, ausgehend von nachwachsenden Rohstoffen, **gekennzeichnet durch** die Kombination der folgenden Maßnahmen:
- Aufbereitung von Rohstoffen mit einem Mindestgehalt von 3 %-Masse Alginat ohne zwischenzeitliches Isolieren des Alginats **durch** einfaches Zerkleinern und Waschen des Rohstoffes mit Wasser sowie Zugabe von Natriumcarbonat und Wasser zu einer ersten Reaktionslösung enthaltend wasserlösliches Alginat und Bereitstellung einer Calciumionenquelle in Form einer zweiten Reaktionslösung,
- Sättigung zumindest einer Reaktionslösung mit einem Aufschäummedium,
- Vereinigung der Reaktionslösungen unter Bildung eines wasserunlöslichen Calciumalginats bei gleichzeitigem Aufschäumen,
- Trocknung,
- Formgebung
sowie gegebenenfalls einer Nachbehandlung entsprechend dem spezifischen Verwendungszweck.

2. Verfahren nach Anspruch 1, dadurch gekennzeichent, daß Rohstoffe auf Basis von rohen Braunalgen (Phaeophycea), insbesondere Braunalgen der Ordnung Fucales und/oder Laminariales bzw. der Gattungen Ascophyllum, Fucus und Laminaria, Ecklonia sowie Macrocystis beziehungsweise Mischungen dieser Algen eingesetzt werden.

3. Verfahren nach Anspruch 1 oder 2, **dadurch gekennzeichnet, daß** die Rohstoffe einen Alginatgehalt zwischen 4 und 12 %-Masse aufweisen.

4. Verfahren nach einem der Ansprüche 1 bis 3, **dadurch gekennzeichnet, daß** eine Calciumchlorid-Lösung als Calciumionenquelle eingesetzt wird.

5. Verfahren nach einem der Ansprüche 1 bis 4, **dadurch gekennzeichnet, daß** Wasser als Lösungsmittel zur Herstellung der Reaktionslösungen eingesetzt wird.

6. Verfahren nach einem der Ansprüche 1 bis 4, **dadurch gekennzeichnet, daß** ein Gemisch von Wasser mit mischbaren organischen Lösungsmitteln zur Herstellung der Reaktionslösungen eingesetzt wird.

7. Verfahren nach Anspruch 6, **dadurch gekennzeichnet, daß** eine Wasser/Aceton-Mischung als Lösungsmittel zur Herstellung der Reaktionslösungen eingesetzt wird.

8. Verfahren nach einem der Ansprüche 1 bis 7, **dadurch gekennzeichnet, daß** einer bzw. beiden Reaktionslösungen Zusatzstoffe ausgewählt aus der Gruppe bestehend aus Fasermaterialien, wie Flachs oder Hanf, Zellstoff bzw. Zellulose, Latex, Stärke, Schaumstabilisatoren und Schaumbildner, z.B. Triton, Dioctylsulfosuccinat, Laurinsäure-Dimethylamid, Laurylsulfat, etc., Farbstoffe, Pigmente, Biozide (Fungizide etc.), Antioxidantien, flammenhemmende Stoffe, Harze, Füllstoffe, zum Beispiel CaCO₃, Na₂CO₃, Sägespäne, etc., UV-Stabilisatoren, Hitze-Stabilisatoren, Viskositäts-Regler, wasserabstoßende Substanzen, Antistatika, Gleit- und Schmiermittel sowie Kombinationen hievon zugesetzt werden.

9. Verfahren nach einem der Ansprüche 1 bis 8, **dadurch gekennzeichnet, daß** ein Aufschäummittel ausgewählt aus der Gruppe bestehend aus festen, flüssigen und gasförmigen Aufschäummittel, beispielsweise Luft, Stickstoff, CO₂ und dgl., sowie Mischungen hievon, verwendet wird.

10. Verfahren nach Anspruch 9, **dadurch gekennzeichnet, daß** zumindest eine der Reaktionslösungen mit Luft unter Druck gesättigt wird, wobei das Aufschäumen durch ein Entspannen der Reaktionelösung und der damit verbundenen Freisetzung der gelösten Luft erfolgt.

11. Verfahren nach einem der Ansprüche 1 bis 10, **dadurch gekennzeichnet, daß** der gebildete Schaumstoff vor der Trocknung einer Verdrängungewäsche unterzogen wird.

12. Verfahren nach Anspruch 11, **dadurch gekennzeichnet, daß** bei der Verdrängungswäsche des gebildeten Schaumstoffs organische Lösungsmittel bzw. Lösungsmittelgemische, welche mit Wasser ein Azeotrop bilden und einen verhältnismäßig niedrigen Siedepunkt aufweisen, vorzugsweise Aceton, eingesetzt werden.

13. Verfahren nach einem der Ansprüche 1 bis 12, **dadurch gekennzeichnet, daß** bei der Trocknung Mikrowellen-, Kontakt-, Konvektions-, z.B. Wirbelschicht-, Strahtungs-, Vakuumtrocknungsverfahren, mechanische Trocknungsverfahren und/oder Kombinationen dieser Trocknungeverfahren eingesetzt werden.

14. verfahren nach einem der Ansprüche 1 bis 13, **dadurch gekennzeichnet, daß** der fertige Schaumstoff einer Nachbehandlung in Form einer Beschichtung mit Wachsemulsionen, Naturharzen und/oder Farbstoffen unterworfen wird.

15. Verwendung von Rohstoffen mit einem Mindestgehalt von 3 %-Masse Alginat, wie beispielsweise Braunalgen (Phaeophycea), insbesondere Braunalgen der Ordnung Pucales und/oder Laminariales bzw. der Gattungen Ascophyllum, Fucus und Laminaria, Ecklonia sowie Macrocystis beziehungsweise Mischungen dieser Algen, als Ausgangsprodukt in einem Verfahren zur Herstellung eines Schaumstoffes, ohne zwischenzeitliches Isolieren des Alginats.

## Claims

1. A method of producing a foamed material, departing from regrowing raw materials, **characterized by** the combination of the following measures:
• processing raw materials having a minimum content of 3% by mass of alginate, without an intermediate isolation of the alginate, by simple comminuting and washing of the raw material with water as well as adding sodium carbonate and water so as to obtain a first reaction solution containing water-soluble alginate and providing a source of calcium ions in the form of a second reaction solution,
• saturating at least one reaction solution with a foaming medium,
• combining the reaction solutions thereby forming a water-insoluble calcium alginate with simultaneous foaming,
• drying
• moulding,
as well as optionally an after-treatment according to the specific purpose of use.

2. A method according to claim 1, **characterised in that** raw materials based on raw brown algae (Phaeophycea), in particular brown algae of the order Fucales and/or Laminariales and of the species Ascophyllum, Fucus and Laminaria, Ecklonia as well as Macrocystis, or mixtures of these algae, respectively, are used.

3. A method according to claim 1 or 2, **characterised in that** the raw materials have an alginate content of between 4 and 12% by mass.

4. A method according to any one of claims 1 to 3, **characterised in that** a calcium chloride solution is used as the source of calcium ions.

5. A method according to any one of claims 1 to 4, **characterised in that** water is used as a solvent for preparing the reaction solutions.

6. A method according to any one of claims 1 to 4, **characterised in that** a mixture of water with miscible organic solvents is used for preparing the reaction solutions.

7. A method according to claim 6, **characterised in that** a water/acetone mixture is used as the solvent for preparing the reaction solutions.

8. A method according to any one of claims 1 to 7, **characterised in that** to one or to both reaction solution(s), respectively, additives are admixed selected from the group consisting of fiber materials, such as linum or hemp, pulp or cellulose, latex, starch, foam stabilizers and foaming agents, e.g Triton, di-oxtylsulfosuccinate, lauric acid-dimethylamide, lauryl sulfate, etc., dyes, pigments, biocides (fungicides, etc.), antioxidants, flame-retardant substances, resins, fillers, e.g. CaCO₃, Na₂CO₃, sawdust etc., UV stabilizers, thermal stabilizers, viscosity regulators, water-repellent substances, antistatic agents, slip agents and lubricants as well as combinations thereof.

9. A method according to any one of claims 1 to 8, **characterised in that** a foaming agent selected from the group consisting of solid, liquid and gaseous foaming agents is used, e.g. air, nitrogen, CO₂ and the like, as well as mixtures thereof.

10. A method according to claim 9, **characterised in that** at least one of the reaction solutions is saturated with air under pressure, foaming being effected by a relaxation of the reaction solution and the release of the dissolved air associated therewith.

11. A method according to any one of claims 1 to 10, **characterised in that** the foamed material formed is subjected to a displacement wash prior to drying.

12. A method according to claim 11, **characterised in that** organic solvents or solvent mixtures which form an azeotropic substance with water and have a comparatively low boiling point, preferably acetone, are used in the displacement wash of the foamed material formed.

13. A method according to any one of claims 1 to 12, **characterised in that** microwave, contact, convection, e.g. fluidized bed, radiation, vacuum drying methods, mechanical drying methods and/or combinations of these drying methods are used during drying.

14. A method according to any one of claims 1 to 13, **characterised in that** the finished foamed material is subjected to an after-treatment in the form of a coating with wax emulsions, natural resins and/or dyes.

15. The use of raw materials having a minimum content of 3% by mass of alginate, such as, e.g., brown algae (Phaeophycea), in particular brown algae of the order Fucales and/or Laminariales and of the species Ascophyllum, Fucus and Laminaria, Ecklonia as well as Macrocystis or mixtures of these algae, respectively, as the starting product in a method of producing a foamed material, without intermediate isolation of the alginate.

## Revendications

1. Procédé pour la production d'un produit alvéolaire à partir de matières premières renouvelables, **caractérisé par** la combinaison des mesures suivantes :
- traitement de matières premières ayant une teneur minimum de 3 % en masse d'alginate sans isolation intermédiaire dudit alginate, par simple désintégration et lavage de ladite matière première avec de l'eau ainsi que par addition du carbonate de sodium et de l'eau à une première solution réactionnelle contenant de l'alginate soluble dans l'eau, et approvisionnement d'une source d'ions de calcium sous forme d'une deuxième solution réactionnelle,
- saturation d'un agent de moussage d'au moins une des solutions réactionnelles,
- réunion desdites solutions réactionnelles en formant un alginate de calcium qui est insoluble dans l'eau, avec moussage simultané,
- séchage,
- moulage,
ainsi que, le cas échéant, traitement postérieur en fonction de l'affectation spécifique.

2. Procédé selon la revendication 1, **caractérisé en ce que** l'on utilise des matières premières basées sur des algues brunes (phéophycées) brutes, en particulier des algues brunes de l'ordre *Fucales* et/ou *Laminariales*, ou respectivement des espèces *Ascophyllum, Fucus* et *Laminaria, Ecklonia* ainsi que *Macrocystis*, ou respectivement des mélanges desdites algues.

3. Procédé selon la revendication 1 ou 2, **caractérisé en ce que** lesdites matières premières ont des teneurs d'alginate entre 4 et 12 % en masse.

4. Procédé selon l'une des revendications 1 à 3, **caractérisé en ce que** l'on utilise une solution de chlorure de calcium en tant que source d'ions de calcium.

5. Procédé selon l'une des revendications 1 à 4, **caractérisé en ce que** l'on utilise de l'eau en tant que solvant pour la préparation desdites solutions réactionnelles.

6. Procédé selon l'une des revendications 1 à 4, **caractérisé en ce que** l'on utilise un mélange d'eau avec de solvants organiques miscibles pour la préparation desdites solutions réactionnelles.

7. Procédé selon la revendication 6, **caractérisé en ce que** l'on utilise un mélange eau/acétone en tant que solvant pour la préparation desdites solutions réactionnelles.

8. Procédé selon l'une des revendications 1 à 7, **caractérisé en ce que** l'on additionne à une ou les deux solutions réactionnelle(s) des additifs choisis dans l'ensemble formé par des matières fibreuses comme le lin ou le chanvre, la pâte de cellulose ou la cellulose, le latex, l'amidon, les stabilisateurs de mousse et les générateurs de mousse, par exemple le triton, le sulfosuccinate de dioctyl, le diméthylamide d'acide laurique, le sulfate laurique, etc., les colorants, les pigments, les biocides (les fongicides etc.), les antioxydants, les retardateurs de combustion, les résines, les matières de charge, par exemple CaCO₃, Na₂CO₃, les sciures, etc., les stabilisateurs UV, les stabilisateurs de chaleur, les régulateurs de viscosité, les substances hydrophobes, les agents antistatiques, les agents antifriction et les lubrifiants ainsi que les combinaisons desdites matières.

9. Procédé selon l'une des revendications 1 à 7, **caractérisé en ce que** l'on utilise un agent de moussage choisi dans l'ensemble formé par des agents de moussages solides, liquides et gazeux, par exemple l'air, le nitrogène, le CO₂ et similaires, ainsi que des mélanges desdits agents.

10. Procédé selon la revendication 9, **caractérisé en ce qu'**au moins une des solutions réactionnelles est saturée d'air sous pression en effectuant le moussage par la détente de ladite solution réactionnelle et la libération de l'air dissout ainsi causée.

11. Procédé selon l'une des revendications 1 à 10, **caractérisé en ce que** le produit alvéolaire formé est soumis à un lavage de déplacement avant d'être séché.

12. Procédé selon la revendication 11, **caractérisé en ce que** l'on utilise, pour le lavage de déplacement du produit alvéolaire formé, des solvants ou mélanges de solvants organiques qui forment des azéotropes avec l'eau et ont un point d'ébullition relativement bas, l'acétone de préférence.

13. Procédé selon l'une des revendications 1 à 12, **caractérisé en ce que** le séchage est réalisé par des procédés à microondes, de contact, de convection, par exemple par lit fluidisé, aux rayonnements, par séchage à vide, des procédés de séchage mécaniques et/ou des combinaison desdits procédés de séchage.

14. Procédé selon l'une des revendications 1 à 13, **caractérisé en ce que** le produit alvéolaire fini est soumis à un traitement postérieur sous forme d'un revêtement par des émulsions de cire, des résines naturelles et/ou des colorants.

15. L'utilisation des matières premières ayant une teneur minimum de 3 % en masse d'alginate tel que, par exemple, des algues brunes (phéophycées), en particulier des algues brunes de l'ordre *Fucales* et/ou *Laminariales*, ou respectivement des espèces *Ascophyllum, Fucus* et *Laminaria, Ecklonia* ainsi que *Macrocystis*, ou respectivement des mélanges desdites algues en tant que matières de départ dans un procédé pour la production d'un produit alvéolaire sans isolation intermédiaire dudit alginate.
